# EUROPÄISCHE PATENTANMELDUNG

(11) **EP 1 806 056 A1**
(43) Veröffentlichungstag der Anmeldung: **11.07.2007**
(21) Anmeldenummer: 07000024.5
(22) Anmeldetag: 02.01.2007
(51) Int. Cl.: A23K 1/00, A23K 1/165, A23L 1/00, A61K 9/16

(54) **Teilchen mit darin enthaltener empfindlicher Komponente**

(30) Priorität: 05.01.2006 DE 102006001553
(71) Anmelder: IPC Process-Center GmbH & Co., 01277 Dresden (DE)
(72) Erfinder: Kempe, Wolfgang, 01169 Dresden (DE); Nagel, Gunnar, 01237 Dresden (DE); Englisch, Wolfram, 01728 Bannewitz (DE); Dittmann, Jörg, 01936 Königsbrück (DE)
(74) Vertreter: Pfenning, Meinig & Partner GbR

(57) **Zusammenfassung**

Die Erfindung betrifft Teilchen, die mindestens eine empfindliche Komponente enthalten. Mit ihnen können beispielsweise Nahrungsmittel oder Nahrungsergänzungsmittel u.v.a.m. hergestellt werden. Die Teilchen können in mehr oder weniger großer stückiger Form bereit gestellt werden. Es ist dabei Aufgabe der Erfindung, Teilchen zur Verfügung zu stellen, die problemloser herstellbar sind und die die Eigenschaften der empfindlichen Komponente(n) auch nach einer Weiterverarbeitung aufweisen. Neben mindestens einer empfindlichen Komponente, deren Anteil bevorzugt bei mindestens 20 Masse-% liegen soll, sind die einzelnen Teilchen erfindungsgemäß mit einer langkettigen Fettsäure, deren Anteil ebenfalls mindestens 25 Masse-% betragen sollte und/oder einer zu emulgierenden Komponete, die ausgewählt ist aus Glyceriden, Aliphaten oder deren Derivaten, und außerdem mit einem Zuckerester und/oder Zuckerglycerid gebildet. Das Zuckerester soll mit einem Anteil von mindestens 0,3, bevorzugt mit 0,5 bis 3 Masse-% enthalten sein. Zusätzlich können weitere Komponenten, wie z.B. ein Restwasseranteil, ein organischer Binder oder Farbstoff u.a.m. enthalten sein

## Beschreibung

Die Erfindung betrifft Teilchen, die mindestens eine empfindliche Komponente enthalten. Mit ihnen können beispielsweise Nahrungsmittel oder Nahrungsergänzungsmittel u.v.a.m. hergestellt werden. Die Teilchen können in mehr oder weniger großer stückiger Form bereit gestellt werden.

Die in jeweiligen Teilchen enthaltenen Komponenten können empfindlich gegenüber hohen oder niedrigen Temperaturen, Feuchtigkeit, Oxidation und/oder pH-Einflüsse sein. Die Empfindlichkeit sollte bei der Herstellung, Lagerung und Weiterverarbeitung berücksichtigt werden können.

Neben anderen Additiven, wie z.B. Vitaminen, Provitamine, Antioxidanten, Farbstoffen, trifft dies besonders auf Enzyme, Mikroorganismen im weitesten Sinne (z.B. Hefen), Spurenelemente, Arzneistoffe (Wirk- und Hilfsstoffe) und galenische Zubereitungen zu.

Enzyme und auch andere Komponenten sind aber häufig sehr temperaturempfindlich und können bei höheren Temperaturen Aktivität, ihre Eigenschaften oder Wirkungen zumindest teilweise verlieren. Dabei wirkt sich auch Feuchtigkeit insbesondere in Kombination mit höheren Temperaturen nachteilig aus.

Bei der Herstellung von Tiernahrungspellets wird beispielsweise aber mit Wasserdampf gearbeitet, so dass eine Reduzierung bzw. der Totalverlust an Aktivität ein erhebliches ökonomisches Problem darstellen.

Es sollten daher Vorkehrungen getroffen werden, um die eingesetzte(n) Komponenten vor dem Temperatur- und/oder Feuchtigkeitseinfluss schützen zu können. Dadurch soll auch bei und ggf. auch nach einer Weiterverarbeitung die gewünschte Wirkung der Komponente(n) weitestgehend entfaltet werden können.

Dabei sollte der Anteil an empfindlicher Komponente(n) in den einzelnen Teilchen möglichst konstant sein und dies auch nach der Weiterverarbeitung beibehalten sein.

Üblicherweise erfolgt zumindest ein Teil der Herstellung solcher Teilchen mit einer an sich bekannten Wirbelschichttechnik, bei der mit flüssigem Medium gearbeitet wird. Hierbei bereiten organische Komponenten, insbesondere in Verbindung mit Wasser Probleme. So lassen sich Fette und Öle nur schwer in Wasser gleichmäßig verteilen, wobei auch die jeweiligen Temperaturen einen erheblichen Einfluss ausüben können. So liegen viele Fette bereits bei Temperaturen unter 50 bis 40 °C in fester Phase vor und werden dementsprechend bei einer Abkühlung fest. Dadurch kann es zur Ausbildung von festen Anhaftungen in Behältnissen oder anderen Elementen von Verarbeitungsanlagen, wie z. B. Ventilen oder Düsen kommen. Dies macht einen erheblichen Reinigungsaufwand erforderlich und führt zu unerwünschten Verlustzeiten, so dass dann die gewünschte Verfügbarkeit der Anlagentechnik nicht immer gegeben ist und die Betriebskosten nachteilig beeinflusst werden.

Außerdem bereitet es mit den bekannten Lösungen Probleme, eine enge Partikelgrößenverteilung, bei kleinen Durchmessern und eine möglichst präzise Sphärizität einhalten zu können.

Es ist daher Aufgabe der Erfindung, Teilchen zur Verfügung zu stellen, die problemloser herstellbar sind und die die Eigenschaften der empfindlichen Komponente(n) auch nach einer Weiterverarbeitung aufweisen.

Erfindungsgemäß wird diese Aufgabe mit den Merkmalen des Anspruchs 1 gelöst. Vorteilhafte Ausgestaltungen und Weiterbildungen können mit in den untergeordneten Ansprüchen bezeichneten Merkmalen erreicht werden.

Neben mindestens einer empfindlichen Komponente, deren Anteil bevorzugt bei mindestens 20 Masse-% liegen soll, sind die einzelnen Teilchen mit einer langkettigen Fettsäure, deren Anteil ebenfalls mindestens 25 Masse-% betragen sollte, und außerdem mit einem Zuckerester gebildet. Das Zuckerester soll mit einem Anteil von mindestens 0,3, bevorzugt mit 0,5 bis 3 Masse-% enthalten sein. Zusätzlich können weitere Komponenten, wie z.B. ein Restwasseranteil, ein organischer Binder oder Farbstoff u.a.m. enthalten sein.

Neben langkettigen Fettsäuren können andere zu emulgierende Komponenten enthalten sein. Diese können an Stelle einer Fettsäure allein, im Gemisch mit Fettsäure oder als Gemisch mehrerer solcher Komponenten enthalten sein.

Eine zu emulgierende Komponente kann ausgewählt sein aus Glyceriden, Aliphaten oder deren Derivaten (z.B. Wachsalkohole). Aliphaten oder deren Derivate sollten dabei ein geeignetes Schmelzverhalten und hydrophobe Eigenschaften aufweisen. Geeignete Aliphate sind beispielsweise langkettige Alkane mit mehr als sechzehn Kohlenstoffatomen.

Als Glycerid können Tri-, Di- oder Monoglyceride enthalten sein. Diese können mit Fettsäure und einem Zucker (z.B. Glucose oder Sacharose) als Zuckerester vorliegen.

Wachse können natürlicher oder künstlicher Art sein. Es kann Montan-, Bienen- oder Carnaubawachs enthalten sein.

Zuckerester können durch Zuckerglyceride ersetzt oder auch im Gemisch enthalten sein. Zuckerglyceride können mit Zucker und Fettsäure gebildet sein. So ist beispielsweise Sacharosemonostearat ein geeignetes Zuckerglycerid und mit Disacharid und Stearinsäure gebildet.

Dabei kann der Aufbau erfindungsgemäßer Teilchen in Abhängigkeit vom jeweiligen Vorgehen bei der Herstellung beeinflusst sein.

So kann ein Kern von einer Beschichtung umschlossen sein. Der Kern kann allein aus empfindlicher Komponente oder aber mit in einer Matrix eingebetteter Komponente gebildet sein. Eine solche Matrix kann neben der Komponente(n) auch die jeweilige Fettsäure, zu emulgierende Komponente und ein Zuckerester und/oder Zuckerglycerid enthalten oder aus diesen beiden Komponenten gebildet sein.

Geeignete Fettsäureester sind beispielsweise Tri-, Di-, oder Monoglyceride.

Als geeignete Zuckerglyceride können alle, die zur Gruppe der E 474 gehörenden Verbindungen gezählt werden und in Lebensmitteln zugelassen sind, eingesetzt werden.

Bevorzugt soll ein Zuckerester einer Saccharose mit 1 bis 3 Molekülen Fettsäure, enthalten sein, das für Lebensmittel unbedenklich ist und zur Gruppe E 473 zählt. Es kann sich dabei um das Zuckerester der Fettsäure handeln, die ebenfalls in Teilchen enthalten ist. Zuckerester können Sucrosestearate, -palmitate, -laurate, -oleate oder -erucate sein.

Bevorzugte langkettige Fettsäuren sind Stearin- und Palmitinsäure.

Die erfindungsgemäßen Teilchen sollten eine Partikelgröße im Bereich von 50 bis 5000 µm, bevorzugt kleiner 500 µm, besonders bevorzugt eine Größe im Bereich 250 bis 350 µm aufweisen, wobei bei der Partikelgröße die Eigenschaften oder Wirkungen der jeweiligen Komponente berücksichtigt werden können.

Vorteilhaft für die Verarbeitung und Lagerung kann zusätzlich ein organischer Binder enthalten sein.

Dieser verbessert z.B. die Abriebfestigkeit und kann ein Aneinanderhaften verhindern. Hierfür sind modifizierte Cellulosen, Polyvinylalkohole, Polyvinylpyrrolidone, oder insbesondere Methylcellulosen geeignet.

Die nach der Granulation erstarrte Fettsäure bildet einen Schutz der Komponente(n) gegen Umwelteinflüsse, wie z.B. Feuchtigkeit und Sauerstoff. Es kann damit aber noch ein weiterer vorteilhafter Effekt bei der Weiterverarbeitung erreicht werden. Die erstarrte Fettsäure vollzieht einen Phasenübergang beim Erreichen seiner Schmelztemperatur und es wird somit Energie erforderlich, was temporär zu einer deutlich verringerten Temperaturerhöhung oder gar keiner weiteren Temperaturerhöhung führt. Gleichzeitig mit dem Feuchtigkeitsschutz kann so auch der negative Temperatureinfluss auf die Komponente(n) bei der Herstellung/Weiterverarbeitung reduziert und dadurch die Eigenschaften und Wirkungen beibehalten, zumindest jedoch deutlich weniger reduziert werden, als dies beim Stand der Technik der Fall ist.

Nach Unterschreitung der Schmelztemperatur erstarrt die Fettsäure und/oder die zu emulgierende(n) Komponente(n) wieder und bleibt in den fertigen Teilchen bzw. Produkten enthalten, so dass auch die Schutzfunktion wieder erfüllt werden kann. Außerdem sind die in Rede stehenden Fettsäuren durchaus verstoffwechselbar und in dieser Art und Menge physiologisch als unbedenklich anzusehen.

Für arzneilich wirksame Komponenten, z.B. Arzneistoffen kann ein weiterer vorteilhafter Effekt, nämlich eine retardierende oder zeitlich verschobene Freisetzung einer empfindlichen Komponente erreicht werden.

Die Erfindung kann außerdem weitergebildet werden, indem mindestens ein weiterer Stoff bzw. ein Stoffgemisch eingesetzt wird, der/das ebenfalls eine Phasenumwandlung im kritischen, bei der Herstellung von Produkten, wie z.B. Tiernahrungspellets auftretenden Temperaturbereich vollzieht. Dabei sollte die Phasenumwandlungstemperatur möglichst höher, zumindest aber eine andere sein, als die der Fettsäure. Hierfür können Salzhydrate, ein einen eingelagerten Kristallwasseranteil aufweisendes Carbonat, Phosphat, Citrat, Acetat, Sulfat, ein Zeolith und/oder ein Metalloxid eingesetzt werden. Diese sollten einen Phasenübergang im Temperaturbereich zwischen 30 und 130 °C vollziehen können.

Ein solcher Stoff kann Bestandteil der Matrix sowie der Beschichtung sein. Mit ihm kann aber auch eine gesonderte Schicht um einen Kern, eine Barriereschicht oder eine äußere Hülle gebildet werden. Es können auch mehrere solcher Schichten gebildet werden.

In jedem Fall sollte aber eine Schicht oder Beschichtung eine vollflächige, vollständig geschlossene Schicht sein, die um einen Kern ausgebildet ist.

Allein oder zusätzlich kann eine Hüllschicht radial außen ausgebildet sein. Diese sollte aus oder auch mit einem hydrophoben Stoff oder Stoffgemisch gebildet sein.

Eine solche Hüllschicht kann aus oder mit einem Salz einer Fettsäure, insbesondere von Palmitin- oder Stearinsäuere, wie z.B. Magnesiumstearat, Calciumstearat bzw. Wasserglas, das/die physiologisch unbedenklich sein sollte(n), ausgebildet werden.

Hierfür kann aber auch ein dispergierter Kunststoff, wie z.B. ein Polyethylen, ein Polyacryl, ein Polyvinylacetat oder ein ähnlicher Kunststoff eingesetzt werden.

So können Teilchen weiter vor Feuchtigkeit geschützt, der Abrieb weiter reduziert und ein Anhaften oder Verklumpen vermieden werden, so dass die Verarbeitbarkeit und eine homogene Verteilung bei der Herstellung oder Weiterverarbeitung verbessert werden kann.

Nachfolgend soll auf Möglichkeiten für die Herstellung erfindungsgemäßer Teilchen eingegangen werden.

Dabei kann eine wässrige Emulsion aus langkettiger Fettsäure und/oder zu emulgierender Komponente und Zuckerester und/oder Zuckerglycerid bei einer Temperatur oberhalb der Schmelztemperatur der Fettsäure hergestellt werden. Diese Emulsion kann ständig gerührt werden, so dass eine über das Volumen gleichmä-ßige Konsistenz aufrechterhalten wird.

In einer ersten Alternative können der Emulsion zusätzlich eine oder mehrere empfindliche Komponente(n) zugegeben werden. Eine solche Emulsion kann dann mittels eines Wirbelschichtverfahrens granuliert werden. Die so erhaltenen Teilchen sind in Form einer in einer Matrix eingebetteten Komponente ausgebildet und können so weiterverarbeitet werden.

Sie können aber auch als Kern in einem Teilchen fungieren, der nachfolgend mit mindestens einer Beschichtung oder mehreren Schichten überzogen werden kann. Eine Beschichtung kann wieder aus einer wässrigen Emulsion, in der Fettsäure und/oder zu emulgierende Komponente(n) und Zuckerester und/oder Zuckerglycerid enthalten sind, durch beispielsweise Aufsprühen mit einer Wirbelschichttechnik ausgebildet werden.

Andere Stoffe oder Stoffgemische können analog bevorzugt nachfolgend aufgebracht werden.

In der Emulsion kann zusätzlich und bevorzugt Methylcellulose, als organischer, wasserlöslicher Binder, gelöst worden sein. Diese verbessert die Verarbeitbarkeit bei der Herstellung der Teilchen oder der Ausbildung einer Beschichtung auf einem Kern.

Insbesondere die Fettsäure und/oder zu emulgierende Komponente(n) in Verbindung mit dem Zuckerester und/oder Zuckerglycerid verbessern die Verarbeitbarkeit erheblich. Es kommt erst bei Temperaturen unterhalb von 30 ° C zu ersten Problemen durch Anhaftungen in den Fertigungsanlagenkomponenten, so dass Ausfallzeiten wegen erforderlicher Reinigung reduziert werden können. Auch eine vollständige Reinigung ist erheblich leichter möglich. Es kann auf herkömmliche, ohnehin vorhandene Anlagentechnik bei der Herstellung zurückgegriffen werden und auf aufwendige Modifizierungen an einer vorhandenen Anlage verzichtet werden.

Die Teilchen können in enger Partikelgrößenverteilung hergestellt werden, so dass auf eine Klassierung verzichtet werden kann.

Die enthaltenen empfindlichen Komponenten behalten ihre Eigenschaften, Wirkungen oder Aktivität weitestgehend, so dass z.B. Teilchen mit entsprechend gewünschter Güte zur Verfügung gestellt werden können Diese kann aber auch auf einen vorgegebenen Wert eingestellt werden, zumindest jedoch eine Güte in einem engen Intervall eingehalten werden.

Nachfolgend soll die Erfindung an Hand von Beispielen weiter erläutert werden.

### Beispiel 1:

Dabei sollen 5 kg Emulsion für die Herstellung von Teilchen 1975 g Wasser, 1500 g Palmitinsäure und 25 g Palmitinsäureester in ein beheizbares Rührgerät gegeben, bei 70 °C intensiv verrührt und die Palmitinsäure emulgiert werden.

In diese Emulsion werden 1500 g einer 10 %-igen wässrigen Lösung von Methylcellulose gegeben, weiter gerührt und dabei homogen verteilt. Auf diesen organischen Binder kann ggf. aber auch verzichtet werden. Es ist auch der Einsatz eines anderen Binders denkbar und möglich.

Die fertige Emulsion kann dann für die Ausbildung einer Beschichtung in eine Wirbelschicht eingesprüht werden, so dass die Beschichtung aus im Wesentlichen Palmitinsäure, Palmitinsäureester und z.B. Methylcellulose auf Kernen, die in der Wirbelschichtanlage bearbeitet werden können, ausgebildet werden kann. Das Einsprühen kann mit einer Temperatur der Emulsion unterhalb von 70 °C, bevorzugt bei einer Temperatur im Bereich 30 bis 40 °C erfolgen.

Die Kerne können aus bzw. mit Zitronensäure gebildet sein.

Die fertigen Teilchen hatten eine mittlere Partikelgröße von 400 µm und schlossen den aus Zitronensäure gebildeten Kern vollständig ein.

Die Beschichtung war mit ca. 89,5 Masse-% Palmitinsäure, ca. 9 Masse-% Methylcellulose und ca.1,5 Masse-% Palmitinsäuerester gebildet.

Mindestens eine empfindliche Komponente kann aber auch bereits der vorab beschriebenen Emulsion zugegeben und darin homogen verteilt werden, so dass beim Versprühen der Emulsion in einer Wirbelschicht die empfindliche Komponente in einer entsprechenden Matrix eingeschlossen bzw. enthalten ist.

Nachfolgend können, wie im allgemeinen Teil der Beschreibung erwähnt, mindestens eine weitere Schutz- oder Hüllschicht aufgebracht werden.

Teilchen mit empfindlicher Komponente, die bereits beschichtet sind, wobei solche Schichten, wie die beschriebenen Barriere- oder Hüllschichten auf Kernen ausgebildet worden sind, können in einer Wirbelschicht auch mit der Emulsion, wie sie am Anfang definiert worden ist, ohne empfindliche Komponente mit einer äußeren Deckschicht beschichtet werden.

### Beispiel 2:

In 395 g heißes Wasser (85 und 95 °C) werden mittels eines Ystral Dispergierers 5 g eines Zuckeresters Typ P 1670, der von der Firma Syntapharm kommerziell erhältich ist, zu gegeben und ca. 5 min dispergiert und somit gelöst. 300 g Schmelze eines Triglycerids (Revel C) mit einer Temperatur von ca. 80 bis 90 °C werden bei laufendem Dispergierer in die Wasser-Zuckerester-Lösung gegeben und dispergiert. Es entsteht eine Triglycerid in Wasser Emulsion.

Danach erfolgt die Zugabe von 300 g einer 10 %-igen Methylcelluloselösung (kalt), die in der Emulsion homogen verteilt wird. Es soll eine glatte, optisch homogene, linimentartige viskose Emulsion erhalten worden sein, die nicht aufrahmt. Nach Abkühlung auf Temperaturen im Bereich 50 bis 60 °C kann die Emulsion wie beim Beispiel 1 im Wirbelbett für die Herstellung von Teilchen versprüht werden.

## Patentansprüche

1. Teilchen mit darin enthaltener empfindlicher Komponente, bei dem die Teilchen mit mindestens einer empfindlichen Komponente, mindestens einer langkettigen Fettsäure und/oder mindestens einer zu emulgierenden Komponente, die ausgewählt ist, aus Glyceriden, Aliphaten und deren Derivaten sowie mindestens 0,3 Masse-% eines Zuckeresters und/oder einem Zuckerglycerid gebildet sind.

2. Teilchen nach Anspruch 1 oder 2, **dadurch gekennzeichnet, dass** mindestens 20 Masse-% einer Fettsäure und/oder zu emulgierenden Komponente(n) enthalten sind.

3. Teilchen nach einem der vorhergehenden Ansprüche, **dadurch gekennzeichnet, dass** mindestens 25 Masse-% einer empfindlichen Komponente enthalten sind.

4. Teilchen nach einem der vorhergehenden Ansprüche, **dadurch gekennzeichnet, dass** eine zu emulgierende Komponente ein Tri-, Di- oder Monoglycerid ist.

5. Teilchen nach einem der vorhergehenden Ansprüche, **dadurch gekennzeichnet, dass** eine zu emulgierende Komponente Montan-, Bienen- oder Carnaubawachs ist.

6. Teilchen nach einem der vorhergehenden Ansprüche, **dadurch gekennzeichnet, dass** die empfindliche Komponente ausgewählt aus einem Enzymprotein, einem Vitamin, einem Provitamin, einem Farbstoff, einem Antioxidanten, einem Mikroorganismus, einem Spurenelement, einem Arzneistoff und einer galenischen Zubereitung ist.

7. Teilchen nach einem der vorhergehenden Ansprüche, **dadurch gekennzeichnet, dass** die empfindliche Komponente einen Kern bildet und/oder mit der einen oder einer weiteren empfindlichen Komponente ein Kern gebildet ist, der von einer mit Fettsäure und/oder zu emulgierende Komponente und Zuckerester und/oder Zuckerglycerid gebildeten Beschichtung umschlossen ist.

8. Teilchen nach einem der vorhergehenden Ansprüche, **dadurch gekennzeichnet, dass** die empfindliche Komponente in einer mit Fettsäure und/oder zu emulgierende Komponente und Zuckerester und/oder Zuckerglycerid gebildeten Matrix eingebettet ist.

9. Teilchen nach einem der vorhergehenden Ansprüche, **dadurch gekennzeichnet, dass** eine Palmitin- und/oder Stearinsäure enthalten ist.

10. Teilchen nach einem der vorhergehenden Ansprüche, **dadurch gekennzeichnet, dass** die Teilchen eine Partikelgröße von 50 bis 5000 µm aufweisen.

11. Teilchen nach einem der vorhergehenden Ansprüche, dass zusätzlich eine Methylcellulose, eine modifizierte Cellulose, ein Polyvinylalkohol und/oder ein Polyvinylpyrrolidon mit einem Anteil von mindestens 3 Masse-% enthalten ist/sind.

12. Teilchen nach einem der vorhergehenden Ansprüche, **dadurch gekennzeichnet, dass** die Beschichtung in Form einer vollflächigen, vollständig geschlossenen Schicht um Kerne ausgebildet ist.

13. Teilchen nach einem der vorhergehenden Ansprüche, **dadurch gekennzeichnet, dass** die Beschichtung mit mindestens einem weiteren Stoff und/oder Stoffgemisch, der/die eine Phasenumwandlung bei unterschiedlichen Phasenumwandlungstemperaturen vollzieht, gebildet ist.

14. Teilchen nach einem der vorhergehenden Ansprüche, **dadurch gekennzeichnet, dass** die Beschichtung aus zwei oder mehr übereinander gebildeten Schichten gebildet ist, und die Schichten aus unterschiedlichen Stoffen oder Stoffgemischen gebildet sind.
